# EUROPÄISCHE PATENTANMELDUNG

(11) **EP 0 899 197 A2**
(43) Veröffentlichungstag der Anmeldung: **03.03.1999**
(21) Anmeldenummer: 98116463.5
(22) Anmeldetag: 01.09.1998
(51) Int. Cl.: B65B 35/56, B65B 25/06

(54) **Verfahren und Vorrichtung zum Verteilen des Produktstromes**

(30) Priorität: 01.09.1997 DE 19738159
(71) Anmelder: BIFORCE Anstalt, FL-9490 Vaduz (LI)
(72) Erfinder: Die Erfindernennung liegt noch nicht vor
(74) Vertreter: Schmidt, Christian

(57) **Zusammenfassung**

Eine Vorrichtung zum Verteilen eines Produktstromes weist eine Fördereinrichtung (10) auf, welche die Produkte in Förderrichtung transportiert und dabei die geförderten Produkte quer zur Förderrichtung bewegt. Für jedes Produkt ist ein eigenes Aufnahmeelement (28, 32) vorgesehen, das zumindest in Förderrichtung und quer zur Förderrichtung bewegbar ist.

## Beschreibung

Die vorliegende Erfindung betrifft eine Vorrichtung zum Verteilen eines Produktstromes mit einer Fördereinrichtung, welche die Produkte in Förderrichtung transportiert und dabei die geförderten Produkte quer zur Förderrichtung bewegt (vgl. US 3 512 336).

Bei einem Schneiden von Lebensmittelprodukten mit Hochleistungs-Slicern werden immer höhere Schnittgeschwindigkeiten erzielt, was dazu führt, daß die Slicer auch eine höhere Verarbeitungsgeschwindigkeit zulassen als die nachgeschalteten Verpackungseinheiten, die über Fördereinrichtungen beschickt werden, die zwischen Slicer und Verpackungseinheit angeordnet sind. Durch Aufteilen des Produktstromes auf vorzugsweise parallele Linien laßt sich der Slicer jedoch mit langsamer arbeitenden Verpackungs- bzw. Weiterverarbeitungseinheiten so koppeln, daß insgesamt erhöhte Verarbeitungsgeschwindigkeiten erzielt werden.

Beim Schneiden mit Hochleistungs-Slicern müssen die nachgeordneten Förder- bzw. Verteilervorrichtungen als Produkt üblicherweise eine gestapelte bzw. geschindelte Portion transportieren, wodurch es vorkommen kann, daß diese bei einer Übergabe oder wahrend des Transportes leicht verändert bzw. verformt wird. Auch kann es bei Stapelportionen vorkommen, daß sich deren Ausrichtung verändert, was unerwünscht ist.

Eine weitere Problematik besteht darin, daß ein Aufschneiden von Lebensmittelprodukten günstigerweise so erfolgt, daß das aufzuschneidende Produkt nicht hochkant sondern flach in dem Slicer liegt. Demzufolge gelangt das aufgeschnittene Produkt quer auf die nachfolgende Fördereinrichtung, was jedoch ein Drehen der aufgeschnittenen Portion um 90° erfordert, um ein ordnungsgemäßes Verarbeiten in einer nachgeschalteten Verpackungsmaschine zu ermöglichen.

Es ist das der Erfindung zugrundeliegende Problem (Aufgabe), eine Vorrichtung der eingangs genannten Art zu schaffen, mit der eine besonders leistungsfähige und trotzdem exakte Verteilung der Produkte erzielt und gleichzeitig gewährleistet werden kann, daß die Produkte mit einer vorgebbaren Ausrichtung an eine Weiterverarbeitungseinheit übergeben werden können.

Die Lösung dieser Aufgabe erfolgt durch die Merkmale des Anspruchs 1 und insbesondere dadurch, daß die Fördereinrichtung für jedes Produkt ein eigenes Aufnahmeelement aufweist, das zumindest in Förderrichtung und quer zur Förderrichtung bewegbar ist. Hierbei wird unter Produkt jede zu transportierende Anordnung verstanden, beispielsweise aufgeschnittene Einzelscheiben, geschindelte Anordnungen sowie Stapelportionen.

Da erfindungsgemäß für jedes Produkt ein eigenes Aufnahmeelement vorgesehen ist, erfolgt der Transport sowohl in Förderrichtung wie auch quer zur Förderrichtung besonders schonend. Da quer zur Förderrichtung nur geringe Massen bewegt werden müssen, wird eine schonende Querverteilung der Produkte erreicht, es werden gute Übergänge erzielt und die geförderten Produkte bzw. Portionen werden weder verändert, noch verformt oder unerwünscht verdreht. Von der Aufnahme bis zur Übergabe werden sämtliche Portionen exakt geführt und gehalten, was den Wirkungsgrad der Gesamtanlage bedeutend erhöht.

Vorteilhafte Ausführungsformen der Erfindung sind in der Beschreibung, den Zeichnungen sowie den Unteransprüchen beschrieben.

Nach einer ersten Ausbildung der Erfindung kann die Fördereinrichtung als Endlosförderer ausgebildet sein. Endlosförderer sind im Zusammenhang mit Hochleistungsslicern zwar grundsätzlich bekannt. Jedoch wird erfindungsgemäß erstmals vorgeschlagen, einen solchen Endlosförderer mit eigenen Aufnahmeelementen für jedes Produkt auszustatten.

Nach einer weiteren Ausführungsform der Erfindung können die Aufnahmeelemente unabhängig voneinander quer zur Förderrichtung bewegbar sein, wodurch eine hohe Flexibilität gewährleistet ist. Entsprechend den unterschiedlichen Anforderungen kann die erfindungsgemäße Vorrichtung so eingestellt werden, daß jedes der Aufnahmeelemente während des Transportes in Förderrichtung quer dazu an die gewünschte Position gelangt. Hierbei ist es besonders vorteilhaft, wenn die Aufnahmeelemente in gleichmäßigen Abständen an einem Umlaufförderer angeordnet sind.

Bevorzugt sind die Aufnahmelemente auf Schiebeführungen gelagert, die sich quer zur Förderrichtung erstrecken und die mit der Fördereinrichtung umlaufen. Mit dieser Ausführungsform lassen sich hohe Fördergeschwindigkeiten erzielen, wobei gleichzeitig die Produkte schonend und schnell transportiert werden können. Während des Transportes sind die Portionen praktisch nur der Fliehkraft ausgesetzt.

Bei einer ganz besonders vorteilhaften Ausführungsform der Erfindung sind die Aufnahmeelemente während des Transportes eines Produktes nicht nur quer zur Förderrichtung bewegbar sondern auch um eine vertikale Achse schwenkbar. Durch diese Ausführungsform ist es erstmals möglich, eine Anpassung der durch einen Hochleistungsslicer aufgeschnittene Produkte an die sich anschließenden Verpackungsmaschinen zu ermöglichen. Da bei beispielsweise Käse oder Schinken oft so geschnitten wird, daß das aufzuschneidende Produkt nicht hochkant sondern flach in dem Slicer liegt, muß im Anschluß daran die aufgeschnittene Portion um 90° gedreht werden, damit sie von der Verpackungsmaschine ordnungsgemäß verarbeitet werden kann. Erfindungsgemäß ist dies während des Transportes und alleine durch den erfindungsgemäßen Linienverteiler möglich. Bei dieser Ausführungsform ist keine zusätzliche Drehvorrichtung erforderlich, die Anlage arbeitet sehr schnell und baut kurz.

Nach einer weiteren Ausbildung der Erfindung ist die Querbewegung und vorzugsweise auch eine Schwenkbewegung der Aufnahmeelemente vorzugsweise durch Führungen individuell steuerbar. Hierdurch lassen sich bestimmte, ausgewählte Portionen bestimmten Produktlinien zuführen, was bei einem Hochleistungsbetrieb äußerst wünschenswert ist. Beispielsweise ist es möglich, nach einem Wiegen der geschnittenen Portionen eine bestimmte Portion zu einer Ausschußposition zu bewegen, falls das gewünschte Sollgewicht über- oder unterschritten ist. Durch das Aussteuern dieser Portionen auf ein hierfür vorgesehenes Aussortierband kann die bislang für solche Zwecke vorgesehene Klappe, die in den Produktstrom geschwenkt wurde, entfallen. Dies ist äußerst vorteilhaft, da diese Klappe den heutigen Hochleistungsanforderungen nicht immer genügt.

Nach einer weiteren Ausbildung der Erfindung ist zur Bewegung der Aufnahmeelemente ein mit der Fördereinrichtung umlaufendes Stellelement vorgesehen. Dieses Stellelement kann vorzugsweise zur Übertragung von zwei voneinander unabhängigen Stellbewegungen ausgebildet sein und einen teleskopischen Aufbau besitzen. Mit einem derartigen Stellelement lassen sich sowohl die Längsbewegung wie auch die Querbewegung der Aufnahmeelemente ohne großen konstruktiven Aufwand individuell steuern. Sofern diese Steuerung durch eine Kulissenführung erfolgt, kann auf aufwendige pneumatische, hydraulische oder elektronische Stellglieder verzichtet werden. Hierbei ist es besonders vorteilhaft, wenn für die Querbewegung und für eine Schwenkbewegung des Aufnahmeelementes zwei separate Kulissenführungen vorgesehen sind, in denen Eingriffselemente eines Steuerelementes geführt sind. Bei dieser Ausführungsform kann einerseits die Querbewegung der einzelnen Aufnahmeelemente unabhängig von der Schwenkbewegung gesteuert werden. Andererseits können bei Bedarf unterschiedliche Aufnahmeelemente unterschiedlich weit geschwenkt werden.

Sofern zum Schneiden unterschiedlicher Produkte zwischen einem Fördern mit Verschwenken und einem Fördern ohne Verschwenken des Produkts umgeschaltet werden soll, ist es vorteilhaft, wenn die beiden Kulissenführungen durch eine Verstelleinrichtung relativ zueinander verstellbar sind. Auch ist es vorteilhaft, wenn zwischen einem Eingriffselement des Steuerelementes und dem Aufnahmeelement eine Übersetzung vorgesehen ist, da in diesem Fall durch relativ kleine Steuerbewegungen eine entsprechend größere Stellbewegung hervorgerufen werden kann.

Um die Steuerelemente in verschiedene Kulissenführungen einsteuern zu können, ist nach einer weiteren Ausbildung der Erfindung eine Weiche vorgesehen, die durch ein elektrisches, hydraulisches oder mechanisches Stellglied angesteuert werden kann. Vorzugsweise kann diese Weiche mit einer Meßeinrichtung, beispielsweise einer Waage, verbunden sein, um bestimmte, ausgewählte Portionen an ausgewählte Positionen weiterzuleiten.

Besonders vorteilhaft ist es, wenn zur Bewegung der Aufnahmeelemente in Förderrichtung und zur Bewegung derselben quer zur Förderrichtung nur ein einziger Antrieb vorgesehen ist, da in diesem Fall sehr kostengünstig gebaut werden kann.

Nachfolgend wird die folgende Erfindung rein beispielhaft anhand einer vorteilhaften Ausführungsform und unter Bezugnahme auf die beigefügten Zeichnungen beschrieben. Es zeigen:
- Fig. 1: eine schematische Draufsicht auf eine Vorrichtung zum Verteilen eines Produktstromes;
- Fig. 2: eine Seitenansicht der Vorrichtung von Figur 1;
- Fig. 3: eine Seitenansicht eines Aufnahmeelementes;
- Fig. 4: eine Draufsicht auf das Aufnahmeelement von Fig. 3;
- Fig. 5: eine teilweise geschnittene Seitenansicht eines Steuerelementes;
- Fig. 6: eine Draufsicht auf das Steuerelement von Fig. 5; und
- Fig. 7: eine Seitenansicht eines Verstellelementes.

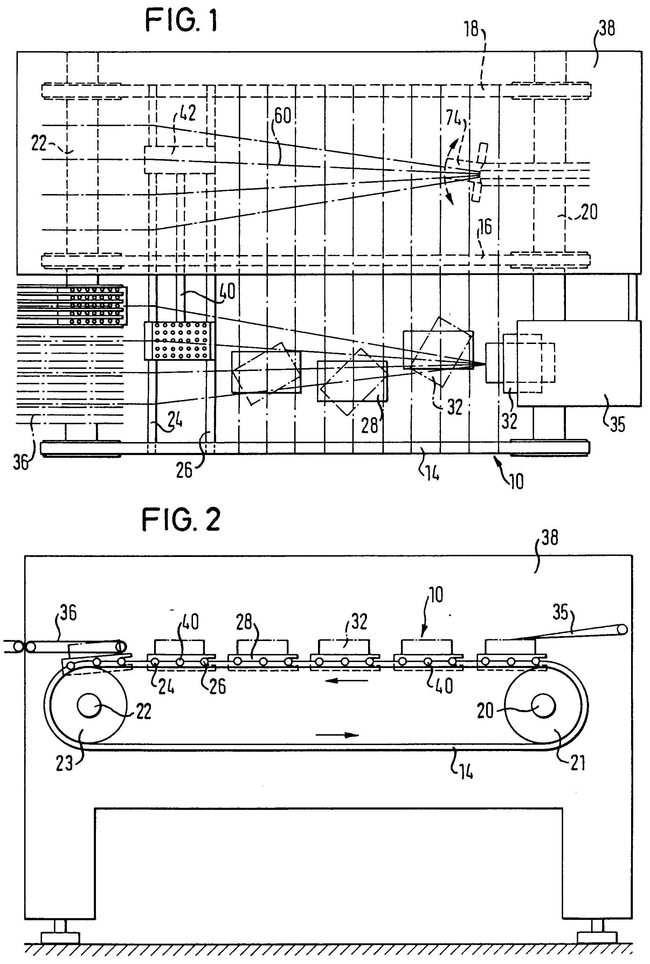

Fig. 1 zeigt eine Draufsicht auf eine Vorrichtung zum Verteilen eines Produktstromes, die eine Fördereinrichtung 10 aufweist, welche die Produkte 12 in Förderrichtung transportiert. Die Fördereinrichtung weist drei parallel angeordnete Zahnriemen 14, 16, 18 auf, die um über Zahnräder 21, 23 zwei Wellen 20, 22 umlaufen. In regelmäßigen Abständen sind auf den Zahnriemen 14, 16, 18 Rundstäbe 24, 26 angebracht, die quer zur Förderrichtung verlaufen und zusammen mit den Zahnriemen umlaufen. Zur besseren Übersichtlichkeit sind in Fig. 1 nur zwei Rundstäbe 24, 26 dargestellt.

Zwischen jeweils zwei Rundstäben ist ein Aufnahmeelement 28 mit einem Nadelkissen 32 angeordnet, das quer zur Förderrichtung auf den Rundstäben 24, 26 verschiebbar ist und das durch den Umlauf der Zahnriemen und der daran befestigten Rundstäbe 24, 26 zusammen mit den Zahnriemen umläuft.

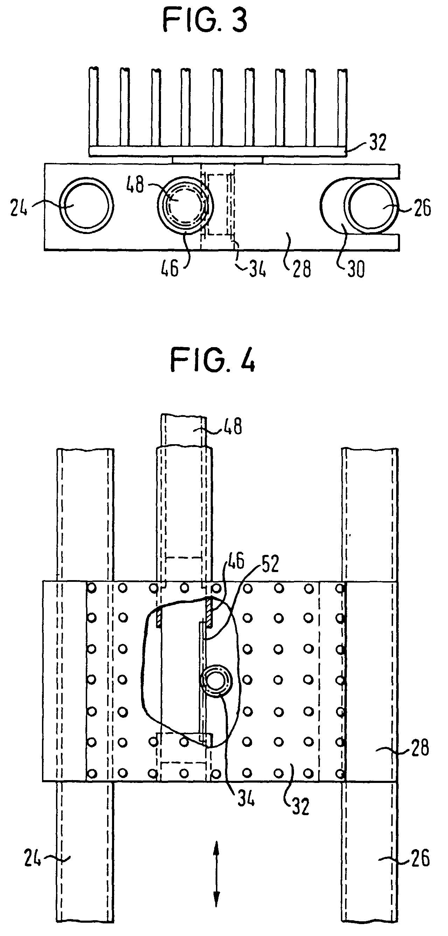

Fig. 3 zeigt im Detail eine Seitenansicht des Aufnahmeelementes 28, das auf den beiden Rundstäben 24, 26 geführt und gelagert ist. Wie Fig. 3 zeigt, ist der vordere Rundstab 24 in einer entsprechenden Kreisbohrung aufgenommen, wohingegen der in Förderrichtung hintere Rundstab 26 in einem Langloch 30 aufgenommen ist, um das Umlaufen der Aufnahmeelemente 28 um die Wellen 20, 22 bzw. die daran befestigten Zahnräder 21, 23 zu ermöglichen.

An der Oberseite jedes Aufnahmeelementes 28 ist ein Nadelkissen 32 angeordnet, auf dem die zu fördernden Produkte zu liegen kommen. Die Befestigung des Nadelkissens 32 an dem Aufnahmeelement 28 erfolgt über eine vertikale Schwenkwelle 34, was nachfolgend noch näher erläutert wird.

Wie Fig. 2 zeigt, erfolgt der Transport der Produkte in Förderrichtung durch die zusammen mit den Zahnriemen 14, 16 und 18 umlaufenden Aufnahmeelemente 28, welche die Produkte von einer Übergabewippe 34 zu einem Rundriemenband 36 führen. Die Übergabewippe 34 taucht zwischen die einzelnen Nadeln des Nadelkissens 32 ein und übergibt dadurch die Produkte schonend auf das Nadelkissen, welches die Produkte bzw. Produktstapel sicher und unverrückbar hält. Am Ende der Transportstrecke taucht das Nadelkissen nach unten ab und kämmt dabei mit dem Rundriemenband 36, wodurch die Produkte nach der Förderstrecke schonend übernommen werden können. Die Fig. 1 und 2 lassen ferner erkennen, daß die Zahnriemen 16 und 18 sowie verschiedene Steuerelemente in einem Gehäuse 38 aufgenommen sind, aus dem die Wellen 20, 22 vorstehen.

Die Querbewegung der einzelnen Aufnahmeelemente 28 erfolgt durch ein Stellelement 40, das zwischen dem Aufnahmeelement 28 und einem Steuerelement 42 angeordnet ist, das ebenfalls auf jeweils zwei Rundstäben 24, 26 gelagert ist. Durch Führen des Steuerelementes 42 auf bestimmten Bahnen wird das Aufnahmeelement 28, welches über das Stellelement 40 mit dem Steuerelement 42 gekoppelt ist, entsprechend verschoben, so daß sich neben der Bewegung in Förderrichtung auch eine Querbewegung ergibt.

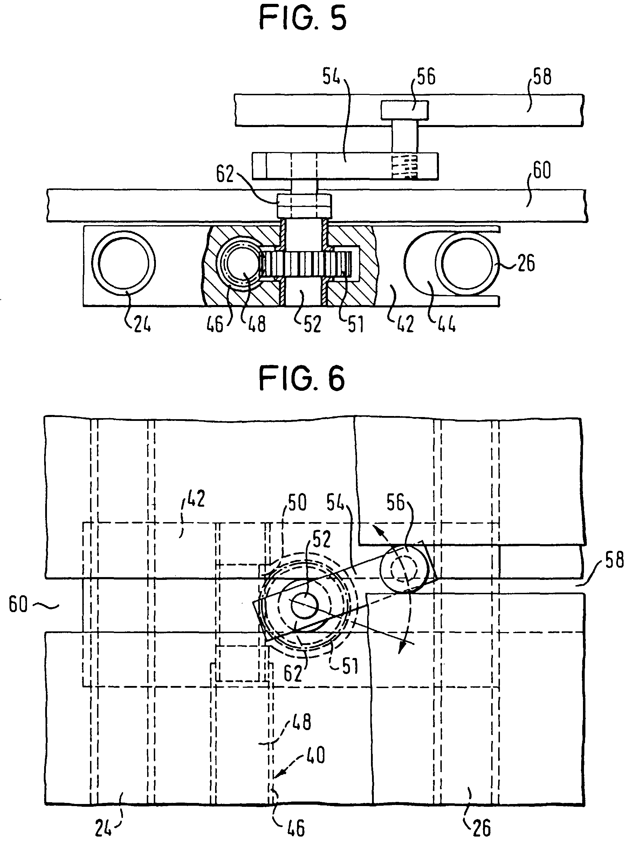

Die Fig. 5 und 6 zeigen im Detail den Aufbau des Steuerelementes 42, das in gleicher Weise wie das Aufnahmeelement 28 auf den beiden Rundstäben 24, 26 gelagert und geführt ist. Auch hier ist der Rundstab 26 in einem Langloch 44 aufgenommen, damit das Steuerelement zusammen mit den Zahnriemen 14, 16, 18 umlaufen kann.

Das Stellelement 40, welches das Steuerelement 42 mit dem Aufnahmeelement 28 verbindet, ist zweiteilig ausgebildet und besteht aus einem außenliegenden Rundrohr 46, das mit dem blockartig ausgebildeten Steuerelement 42 und dem mit Aufnahmeelement 28 fest verbunden ist. Somit kann durch Querbewegen des Steuerelementes 42 das Aufnahmeelement 28 in gleicher Weise quer bewegt werden. Im Inneren des Rundrohres 46 ist teleskopartig ein Innenstab 48 aufgenommen, der zur Übertragung einer Schwenkbewegung auf das Nadelkissen 32 des Aufnahmeelementes 28 dient. Der Innenstab 48 besitzt sowohl im Bereich des Steuerelementes 42 eine Verzahnung 50 (vgl. Fig. 6) sowie im Bereich des Aufnahmeelementes 48 eine Verzahnung 52 (vgl. Fig. 4). Die Verzahnung 52 kämmt mit der Schwenkwelle 34, an der das Nadelkissen 32 befestigt ist. Somit wird durch eine Längsbewegung des Innenstabes 48 eine Drehung des Nadelkissens um die Schwenkwelle 34, d.h. um eine vertikal verlaufende Achse erreicht.

Wie Fig. 5 zeigt, wird der Innenstab 48 durch ein Zahnrad 50 quer zur Förderrichtung verschoben, das um eine vertikal verlaufende Welle 52 drehbar ist, die in dem Steuerelement 42 befestigt ist. Am oberen Ende der Welle 52 ist ein Hebel 54 befestigt, an dessen äußerem Ende eine Laufrolle 56 vorgesehen ist, die in einer Kulissenführung 58 läuft. Sofern die Laufrolle 56 durch eine entsprechende Kulissenführung 58 quer zur Förderrichtung bewegt wird, wird diese Querbewegung auf den Hebel 54 übertragen, der wiederum die Welle 52 und das damit verbundene Zahnrad 50 verdreht, wodurch der Innenstab 48 quer zur Förderrichtung translatorisch bewegt wird. Diese Querbewegung wird auf die Welle 34 des Aufnahmeelementes 28 übertragen, wodurch das mit der Welle 34 verbundene Nadelkissen 32 entsprechend verschwenkt wird. Durch die an den Verzahnungen 50, 52 vorgesehene Übersetzung kann das Nadelkissen 32 um 90° gedreht werden, indem der Hebel 54 lediglich um 45° verschwenkt wird.

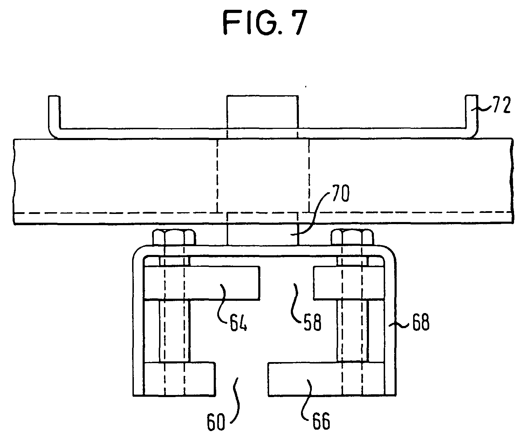

Eine zweite Kulissenführung 60 dient zur Führung einer weiteren Laufrolle 62, die fest mit dem Steuerelement 42 verbunden ist. Durch einen entsprechenden Verlauf der Kulissenführung 60 wird somit die Laufrolle 62 quer zur Förderrichtung bewegt, wodurch auch das Steuerelement 42 dieser Bewegung folgt und diese Querbewegung auf das Rundrohr 46 (Fig. 6) überträgt, welches das Aufnahmeelement entsprechend quer bewegt. In Fig. 1 sind mögliche Verläufe der Kulissenführungen 60 schematisch angedeutet. Wie gut zu erkennen ist, kann durch einen entsprechend gewählten Verlauf der Kulissenführungen 60 eine fächerartige Verteilung der Steuerelemente 42 und damit auch der Aufnahmeelemente 28 erfolgen. Die Kulissenführung 58 ist gegenüber der Kulissenführung 60 versetzt angeordnet und kann gegenüber dieser verschwenkt werden, um die gewünschte Verdrehung des Nadelkissens zu steuern. Der Verstellmechanismus zur Relativverstellung der beiden Kulissenführungen 58, 60 ist in Fig. 7 näher dargestellt.

Wie Fig. 7 zeigt, ist die Kulissenführung 58 zur Steuerung der Schwenkbewegung des Nadelkissens 32 in einer oberen Platte 64 ausgebildet, wohingegen die Kulissenführung 60 zur Steuerung der Querbewegung der Aufnahmeelemente 28 in einer unteren Platte 66 ausgebildet ist. Die beiden Platten 64 und 66 sind an einem U-förmigen Halteteil 68 befestigt, das um eine vertikale Welle 70 verschwenkbar ist. An der Oberseite der Welle 70 ist ein Verstellelement 72 vorgesehen, das beispielsweise durch einen Zahnriemen verschwenkt werden kann. Durch Verschwenken des Verstellelementes 72 wird die Welle 70 und damit auch das Halteteil 68 verschwenkt, wodurch die Relativlage der beiden Platten 64 und 66 verändert wird.

Wie Fig. 1 zeigt, sind zur Steuerung der Querbewegung der Aufnahmeelemente 28 bzw. der Steuerelemente 42 mehrere Kulissenführungen 60 vorgesehen. Ein Einsteuern der Steuerelemente 42 in eine gewünschte Kulissenführung erfolgt durch eine Weiche 74, die um eine vertikale Schwenkachse durch ein nicht dargestelltes Stellelement verschwenkbar ist. Der Antrieb des Stellelementes der Weiche 74 ist auch mit einer vorgeschalteten Wägeeinrichtung gekoppelt, so daß in Abhängigkeit von eingestellten Parametern die Weiche so gestellt werden kann, daß Portionen mit einem Über- oder Untergewicht so gelenkt werden, daß diese auf ein Ausschußband gelangen.

Am unteren Trum der Fördereinrichtung 10 ist eine trichterartige Führung vorgesehen, durch welche die Laufrollen 62 der Steuerelemente so geführt werden, daß die einzelnen Steuerelemente 42 nach dem Verschwenken an die Oberseite der Fördereinrichtung 10 zentriert sind (vgl. Fig. 1). Eine weitere Führung ist vorgesehen, um die Nadelkissen 32 der Aufnahmeelemente 28 in eine definierte Position zu bringen.

Der Betrieb der in den Figuren dargestellten Vorrichtung läuft wie folgt ab.

Durch Inbetriebnahme einer nicht dargestellten Antriebsvorrichtung werden die Wellen 20 und 22 in Drehung versetzt, wodurch die Zahnriemen 14, 16 und 18 umlaufen. Hierdurch laufen ebenfalls die Steuerelemente 42 und die Aufnahmeelemente 28 mit um, die jeweils zwischen zwei Rundstäben 24, 26 verschiebbar gelagert sind. Das Stellelement 40, das jeweils ein Steuerelement 42 mit einen Aufnahmeelement 28 verbindet, läuft ebenfalls mit um.

Die Kulissenführungen 60 zur Steuerung der Querbewegung der Aufnahmeelemente 28 sind so gewählt, daß die Aufnahmeelemente 28 quer zur Förderrichtung an gewünschte Positionen bewegt werden können. In Fig. 1 sind vier verschiedene Positionen dargestellt. Nach Auftauchen eines Aufnahmeelementes 28, d.h. nach Drehen um die Welle 20 ist das zugeordnete Steuerelement 42 durch seine Laufrolle 62 in einer zentrierten Führung geführt und durchläuft anschließend die Weiche 74, die das Steuerelement 42 in die gewünschte Kulissenführung 60 einsteuert. Hierdurch bewegt sich das mit diesem Steuerelement 42 verbundene Aufnahmeelement 28 nicht nur in Förderrichtung sondern auch quer zur Förderrichtung bis es am Ende der Förderbahn die gewünschte Querposition erreicht hat. An dieser Stelle taucht das Nadelkissen 32 des Aufnahmeelementes 28 unter dem Rundriemenband 36 ab und übergibt das Produkt auf dieses Rundriemenband 36. Anschließend wird das Steuerelement 42 im unteren Trum der Fördereinrichtung wieder zentriert.

Die in den Figuren dargestellte Fördereinrichtung ist so ausgebildet, daß auch ein Verschwenken des Nadelkissens 32 um 90° erfolgt, während das Produkt von der Übergabewippe 35 bis zu dem Rundriemenband 36 transportiert wird. Die Schwenkbewegung des Nadelkissens 32 wird dadurch bewirkt, daß die Laufrolle 56 in ihrer zugeordneten Kulissenführung 58 läuft, die von dem Verlauf der Kulissenführung 60 abweicht. Hierdurch wird der Hebel 54 um die Welle 52 verschwenkt und dreht dadurch das Zahnrad 50, welches mit der Zahnung 50 des Innenstabes 48 kämmt, so daß sich dieser quer zur Förderrichtung innerhalb des Rundrohres 46 bewegt. Diese translatorische Bewegung wird am anderen Ende des Innenstabes 48 über die Zahnung 52 auf die Welle 34 übertragen, die das Nadelkissen 32 entsprechend verdreht. Nach Umlauf eines Steuerelementes 42 um das Zahnrad 23 wird auch die Laufrolle 56 durch eine zugeordnete Führung so gesteuert, daß sich das Nadelkissen 32 nach Umlauf um das Zahnrad 21 in der gewünschten Ausgangsposition befindet.

### Bezugszeichenliste

- 10: Fördereinrichtung
- 14: Zahnriemen
- 16: Zahnriemen
- 18: Zahnriemen
- 20: Welle
- 21: Zahnrad
- 22: Welle
- 23: Zahnrad
- 24: Rundstab
- 26: Rundstab
- 28: Aufnahmeelement
- 30: Langloch
- 32: Nadelkissen
- 34: Schwenkwelle
- 35: Übergabewippe
- 36: Rundriemenband
- 38: Gehäuse
- 40: Stellelement
- 42: Steuerelement
- 44: Langloch
- 46: Rundrohr
- 48: Innenstab
- 50: Zahnrad
- 52: Welle
- 54: Hebel
- 56: Laufrolle
- 58: Kulissenführung
- 60: Kulissenführung
- 62: Laufrolle
- 64: Platte
- 66: Platte
- 68: Halteteil
- 70: Welle
- 72: Verstellelement

## Patentansprüche

1. Vorrichtung zum Verteilen eines Produktstromes mit einer Fördereinrichtung (10), welche die Produkte in Förderrichtung transportiert und dabei die geförderten Produkte quer zur Förderrichtung bewegt,
dadurch **gekennzeichnet,** daß
die Fördereinrichtung (10) für jedes Produkt ein eigenes Aufnahmeelement (28, 32) aufweist, das zumindest in Förderrichtung und quer zur Förderrichtung bewegbar ist.

2. Vorrichtung nach Anspruch 1,
dadurch **gekennzeichnet,** daß
die Fördereinrichtung (10) als Endlosförderer ausgebildet ist, und/oder daß die Aufnahmeelemente (28, 32) unabhängig voneinander quer zur Förderrichtung bewegbar sind, und/oder daß die Aufnahmeelemente (28, 32) vorzugsweise in gleichmäßigen Abständen an einem Umlaufförderer (10) angeordnet sind.

3. Vorrichtung nach zumindest einem der vorstehenden Ansprüche,
dadurch **gekennzeichnet,** daß
die Aufnahmeelemente (28, 32) auf Schiebeführungen (24, 26) gelagert sind, die sich quer zur Förderrichtung erstrecken und die vorzugsweise mit der Fördereinrichtung (10) umlaufen.

4. Vorrichtung nach zumindest einem der vorstehenden Ansprüche,
dadurch **gekennzeichnet,** daß
die Aufnahmeelemente (32) während des Transportes eines Produktes um eine vertikale Achse (34) schwenkbar sind, und/oder daß die Querbewegung und vorzugsweise auch eine Schwenkbewegung der Aufnahmeelemente (28, 32) vorzugsweise durch Führungen (58, 60) individuell steuerbar ist, und/oder daß zur Bewegung der Aufnahmeelemente (28, 32) ein mit der Fördereinrichtung umlaufendes Stellelement (40) vorgesehen ist, wobei das Stellelement (40) insbesondere zur Übertragung von zwei voneinander unabhängigen Stellbewegungen ausgebildet ist und vorzugsweise einen teleskopischen Aufbau besitzt.

5. Vorrichtung nach zumindest einem der vorstehenden Ansprüche,
dadurch **gekennzeichnet,** daß
zur Querbewegung und vorzugsweise auch zu einer Schwenkbewegung der Aufnahmeelemente (28, 32) zumindest eine Kulissenführung (58, 60) vorgesehen ist.

6. Vorrichtung nach zumindest einem der vorstehenden Ansprüche,
dadurch **gekennzeichnet,** daß
zur Steuerung der Querbewegung und vorzugsweise auch einer Schwenkbewegung der Aufnahmeelemente (28, 32) ein mit diesen gekoppeltes Steuerelement (42) vorgesehen ist, das zusammen mit einem zugeordneten Aufnahmeelement (28, 32) zumindest in Förderrichtung bewegbar ist.

7. Vorrichtung nach Anspruch 6,
dadurch **gekennzeichnet,** daß
für die Querbewegung und für eine Schwenkbewegung des Aufnahmeelementes (28, 32) zwei separate Kulissenführungen (58, 60) vorgesehen sind, in denen Eingriffselemente (56, 62) des Steuerelementes (42) geführt sind, wobei insbesondere die beiden Kulissenführungen (58, 60) durch eine Verstelleinrichtung relativ zueinander verstellbar sind.

8. Vorrichtung nach Anspruch 6 oder 7,
dadurch **gekennzeichnet,** daß
zwischen einem Eingriffselement (56) und dem Aufnahmeelement (32) eine Übersetzung vorgesehen ist.

9. Vorrichtung nach zumindest einem der vorstehenden Ansprüche 6 bis 8,
dadurch **gekennzeichnet,** daß
eine Weiche (74) vorgesehen ist, mit der die Steuerelemente (42) in verschiedene Kulissenführungen gelenkt werden können.

10. Vorrichtung nach zumindest einem der vorstehenden Ansprüche,
dadurch **gekennzeichnet,** daß
für die Bewegung in Förderrichtung und quer zur Förderrichtung nur ein einziger Antrieb vorgesehen ist.

11. Verfahren zur Verteilung von in einem Produktstrom geförderten Produkten, bei dem die auf einer Fördereinrichtung geförderten Produkte auch quer zur Förderrichtung bewegt werden,
dadurch **gekennzeichnet,** daß
jedes Produkt auf einem eigenen Aufnahmeelement in Förderrichtung bewegt wird, wobei das Produkt vorzugsweise während der Bewegung in Förderrichtung um eine vertikale Achse vorzugsweise um 90° verschwenkt wird, und/oder wobei ausgewählte Produkte während des Förderns auch quer zur Förderrichtung zu einer Ausschußposition bewegt werden.
